# DEMANDE DE BREVET EUROPEEN

(11) **EP 1 672 258 A1**
(43) Date de publication de la demande: **21.06.2006**
(21) Numéro de dépôt: 05292643.3
(22) Date de dépôt: 13.12.2005
(51) Int. Cl.: F16K 15/03, B60K 15/04

(54) **Clapet anti-retour pour réservoir de carburant**

(30) Priorité: 16.12.2004 FR 0413416; 15.04.2005 FR 0503754; 16.11.2005 FR 0511604
(71) Demandeur: Fourment, Thierry, 95200 Sarcelles (FR)
(72) Inventeur: Fourment, Thierry, 95200 Sarcelles (FR)

(57) **Abrégé**

Dispositif anti- refoulement a clapet pour réservoir de carburant.

L'invention concerne un dispositif constitué à installer dans ou sur un réservoir de carburant empêchant le refoulement du carburant et servant de sas et de niveau de remplissage. Il est constitué d'un corps supportant un clapet, (figure 19).

Le dispositif selon l'invention est particulièrement destiné à éviter des accidents, à préserver des vies humaines ainsi qu'économiser du carburant. Ce produit et écologique.

## Description

La présente invention concerne un dispositif se positionnant à l'intérieur d'un réservoir de carburant poids lourds destiné à empêcher le rejet du carburant et a servir de niveau pour le remplissage.

Le débordement des réservoirs des véhicules notamment des camions est très fréquent. Le remplissage d'un réservoir et fait en générale a ras bore, au moment de remettre le bouchon le débordement et automatique. Certain bouchon on des problèmes d'étanchéité et, on peut apercevoir que 9 véhicules poids lourds sur 10 roulant ont les réservoirs imbibés de gasoil, a chaque virage un réservoir plein est en pression et donc la moindre aération permet l'évacuation du carburant.

A chaque ouverture, le bouchon et positionner sur le réservoir ou est suspendu avec sa chaîne d' origine ayant été en contact avec le carburant suinte sur le réservoir, qui fini après plusieurs ouverture de se répandre sur la chaussée, de nombreux accidents sont du à la chaussée glissante on peut facilement imaginer une moto roulant sur une chausse glissante.(directive 2000/8/ce rectifier par C1 du parlement européen et du conseil du 20 mars 2000 réf 3) .En moto les endroits les plus glissants sont les ronds-points ainsi que les virages puisque les véhicules poids lourds ont en générale deux réservoirs et au premier virage droite ou gauche avec un réservoir remplie, le carburant se repend sur la chaussée, ce qui laisse imaginer le nombre de litres de carburant qui s'écoule par jours sur la chaussée donc le nombre de litres de carburant que les propriétaires de ces véhicules peuvent économiser.

Le dispositif anti-refoulement a clapet selon l'invention permet de remédier à ces inconvénients. Ce dispositif permet, une fois installé sur le réservoir de faire la fonction de sas.

Le dispositif se positionne à l'intérieur ou a l'extérieur (selon les variantes) de la goulotte d'origine d'un réservoir dont le diamètre d'entrée est inférieur au diamètre du dispositif, le corps (5) du dispositif est fait de manière à se plier pour réduire son diamètre pour pouvoir l'introduire dans (l'entrée) la goulotte appelé aussi embase du réservoir sans pour cela une fois installé gêner la fermeture du réservoir par son bouchon d'origine, ce procédé est pour les réservoirs déjà installés sur les véhicules le dispositif version clapet intérieur (18)(19) permet de s'installer a l'intérieur d'un réservoir en cours de fabrication.

Une variant du dispositif (22) se positionne sur la goulotte du réservoir de la même manière qu'un bouchon de fermeture pour les véhicules déjà en circulation.

Les dessins annexes illustrent l'invention :
La figure (1) représente en coupe, le dispositif de l'invention vu de face
La figure (2) représente, dispositif de l'invention vu du dessous.
La figure (3A) représente, le dispositif plié avant son positionnement vu de dessous.
   La figure (3B) représente, le dispositif plié avant son positionnement vu de face
La figure (16A) représente en coupe, le dispositif de l'invention vu de face version clapet à l'intérieur du corps (5).
La figure (16B) représente le dispositif de l'invention vu du dessus version clapet a l'intérieur du corps (5).
La figure (17A) représente, en coupe le dispositif l'invention pliée avant son positionnement vu de face version clapet a l'intérieur du corps (5).
La figure (17B) représente, le dispositif l'invention pliée avant son positionnement vu de dessus version clapet a l'intérieur du corps (5).
La figure (18A) représente en coupe, le dispositif de l'invention vu de face version clapet a l'intérieur du corps (21) pour montage avant la fabrication d'un réservoir.
La figure (18B) représente, le dispositif de l'invention vu du dessus version clapet a l'intérieur pour montage avant la fabrication d'un réservoir du corps (21).
La figure (19A) représente en coupe, le dispositif de l'invention vu de face version clapet à l'extérieur du corps (21) pour montage avant la fabrication d'un réservoir.
La figure (19B) représente, le dispositif de l'invention vu du dessus version clapet a l'extérieur du corps (21) pour montage avant la fabrication d'un réservoir.
La figure (22 A) représente, en coupe le dispositif de l'invention vu du dessous version se positionnant sur la goulotte du réservoir.
La figure (22 B) représente, en coupe le dispositif de l'invention vu de face version se positionnant sur la goulotte du réservoir.

En référence a ces dessins le dispositif comporte un corps (5) d'un diamètre inférieur de 0 a 1 mm par rapport au diamètre de la goulotte du réservoir a équiper, une découpe en angle formant un v (5) de 30 à 50 degrés qui permet le pliage du corps (4) et de 2 trous (15) de 4 a 6 mm,
Un support de clapet (6) permet par sont rayon extérieur de se positionner et de positionner le clapet (7)(20), le tous tenu par un axe (10) qui retiens un ressort (11) qui est retenu par des rondelles (12) (top axe) à son emplacement finale.
Le corps (5) comporte un trou central d'un diamètre inférieur au clapet (7) pouvant accepter un joint pour l'étanchéité du clapet si besoin la hauteur du corps (5) et la largeur peuvent varier selon les modèles de réservoir a équiper. La hauteur du corps (5) a titre indicatif peut varier de 1.5 mm a 28 mm. La largeur du corps (5) a titre indicatif peut varier de 80mm a110mm.

Le clapet (7) peut avoir une forme ronde ou en forme ellipse (20) et permet d'obstruer le trou centrale du corps (5) le clapet (7) (20) comporte un trou de ventilation (22) si besoin, il peut être supprimer pour certains modèles de véhicule qui on un système de ventilation externe au réservoir. (directive 2000/8/ce rectifier par C1 du parlement européen et du conseil du 20 mars 2000 ref 5.3. et 5.9.)

Le dispositif (3)(17) peut être introduit dans une goulotte de réservoir dans sa forme. Une fois introduit dans la goulotte du réservoir un encollage par de la colle forte sur les parois du dispositif (4) peut être fait. En vissant les vis(13),les plaques (8)(9)et le support du clapet (6) ont comme fonction selon l'invention de redresser le dispositif (1)ayant une tolérance de 0 a 60 dixièmes du diamètre de la goulotte a équiper, et de se centrer ce qui permet au dispositif un bon positionnement dans la goulotte du réservoir à équiper.

le dispositif version (16)a clapet a l'intérieur du corps (5)se positionne de la même manière , seul le diamètre des trous des plaques (8) (9) et leur rayon extérieur ainsi que le rayon du support de clapet (6) sont inversés. Pour la fixation du dispositif on peut aussi utiliser des points de soudure sur le corps (5) une fois installer dans une goulotte de réservoir.
Le dispositif version (18) à clapet à l'intérieur et version (19) clapet a l'extérieur du corps (21) comprend un support de clapet (6) et un clapet (7)(20) qui est soudé sur le corps (21), qui par rapport au corps (5) ne comprend pas de découpe en forme de V, il se positionne a l'intérieur d'une goulotte d'un réservoir et se fixe par poings de soudure. Cette version et spécialement étudié pour se positionner avant la fabrication d'un réservoir carburant.

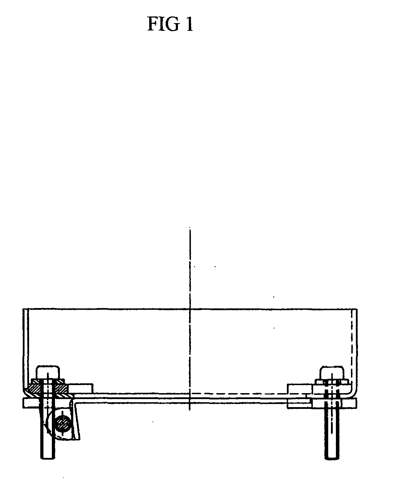

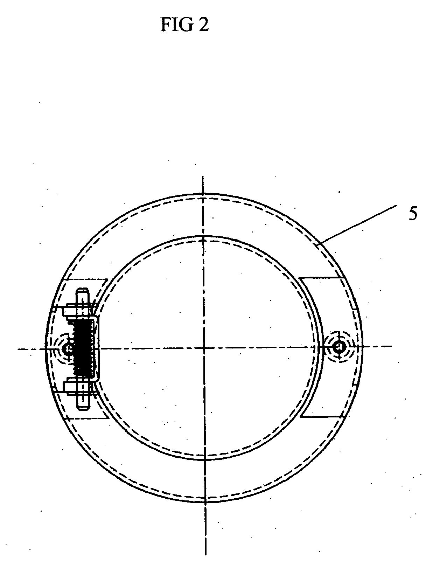

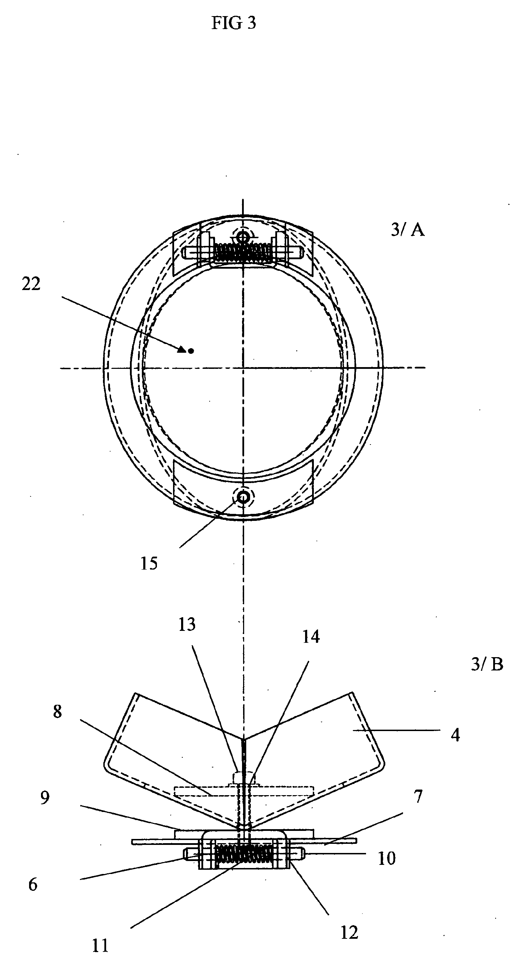

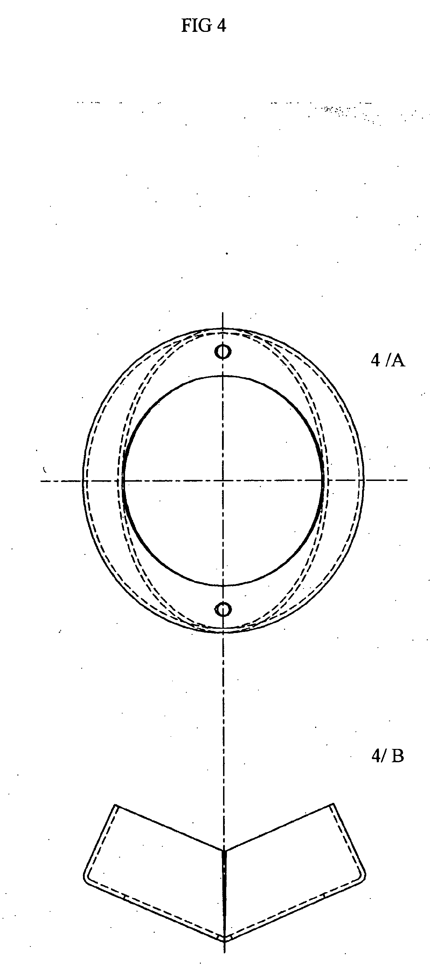

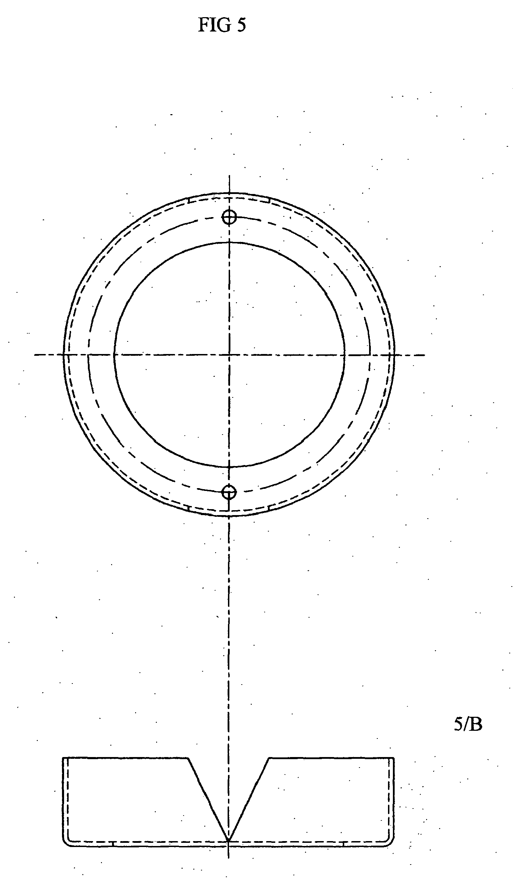

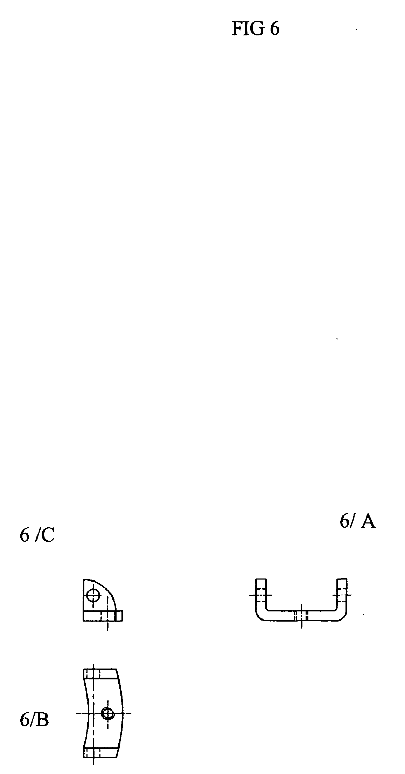

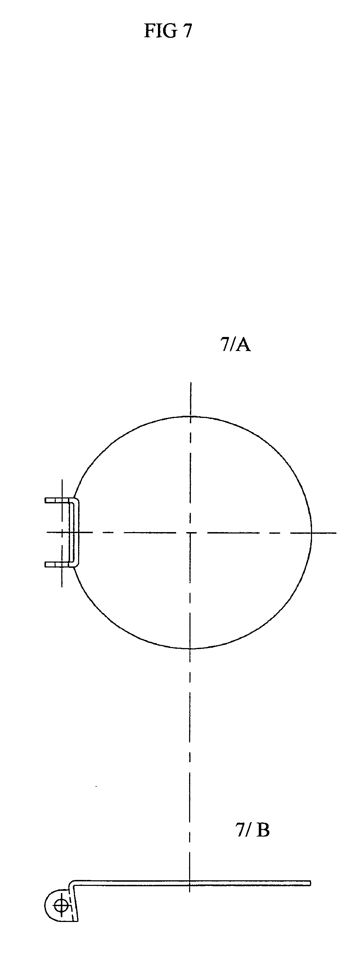

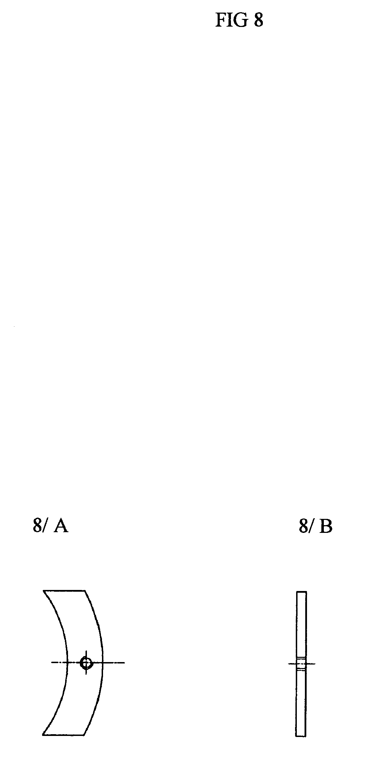

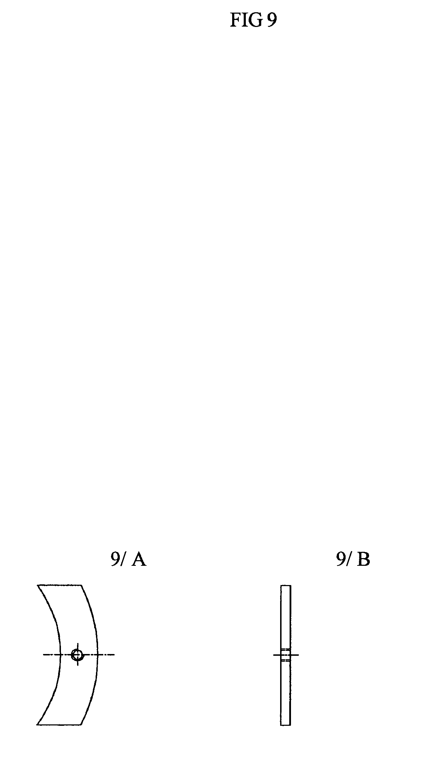

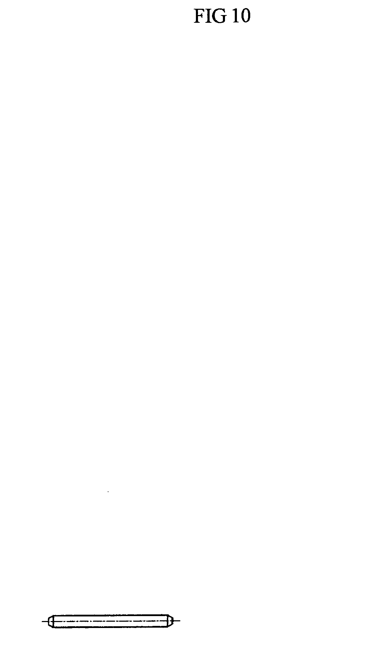

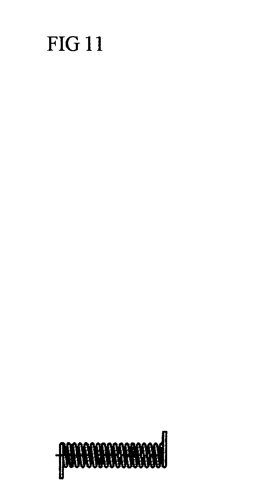

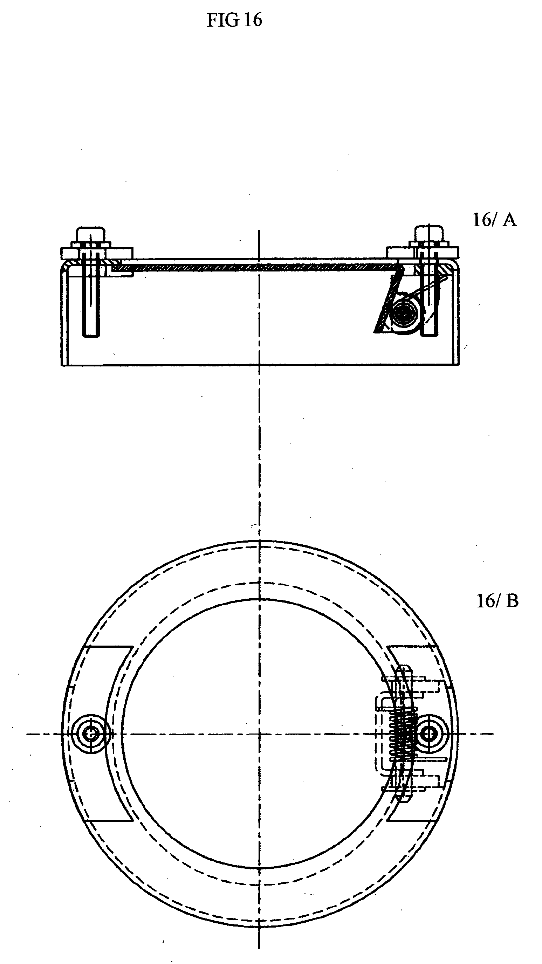

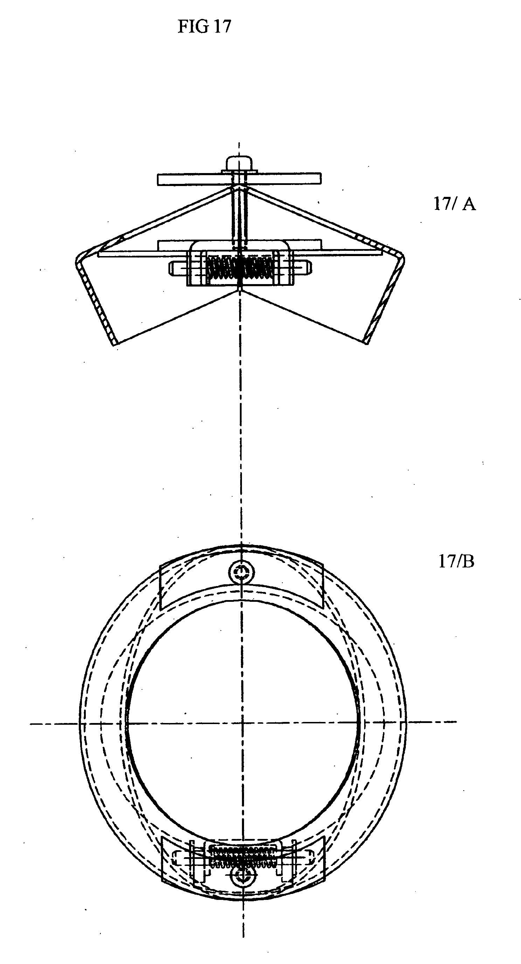

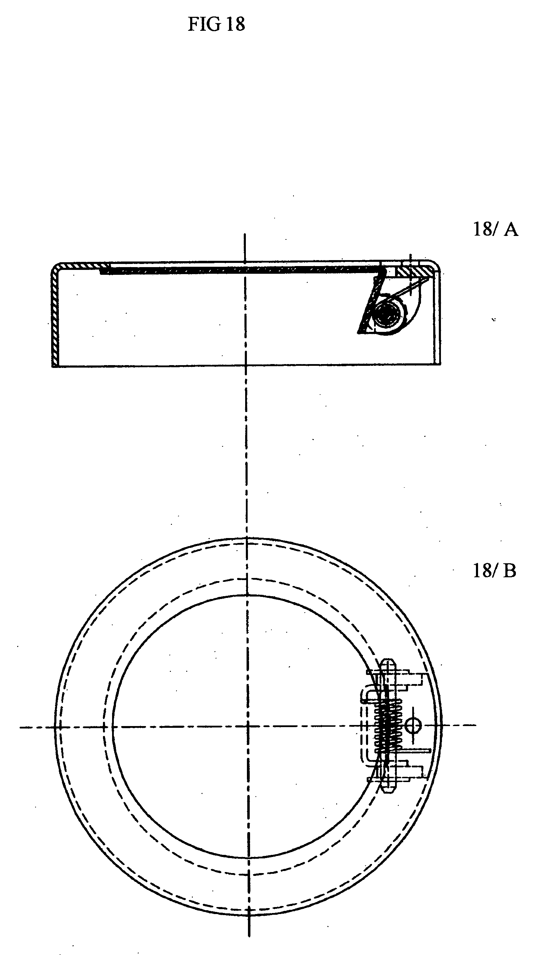

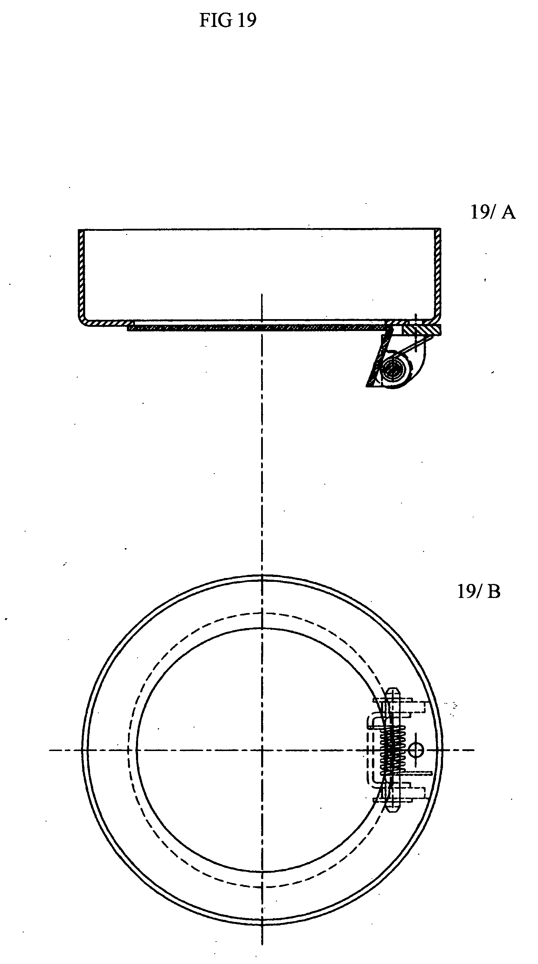

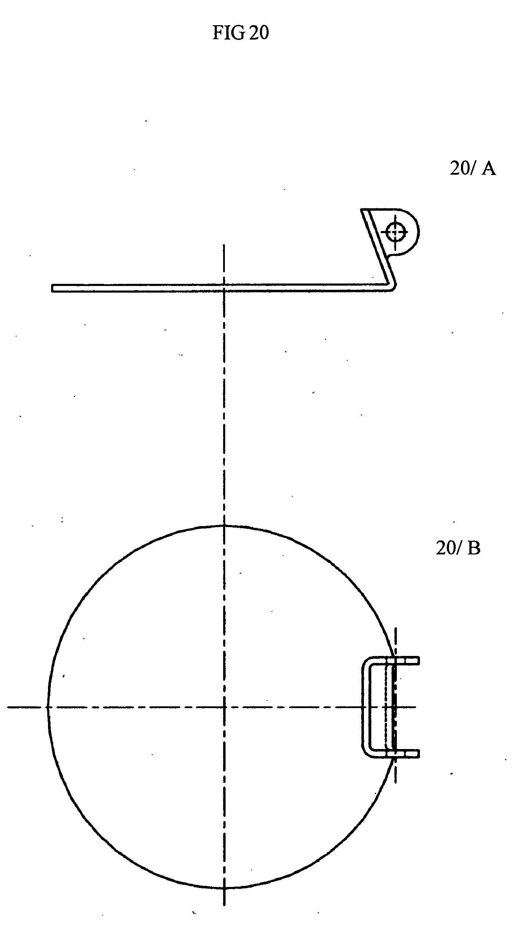

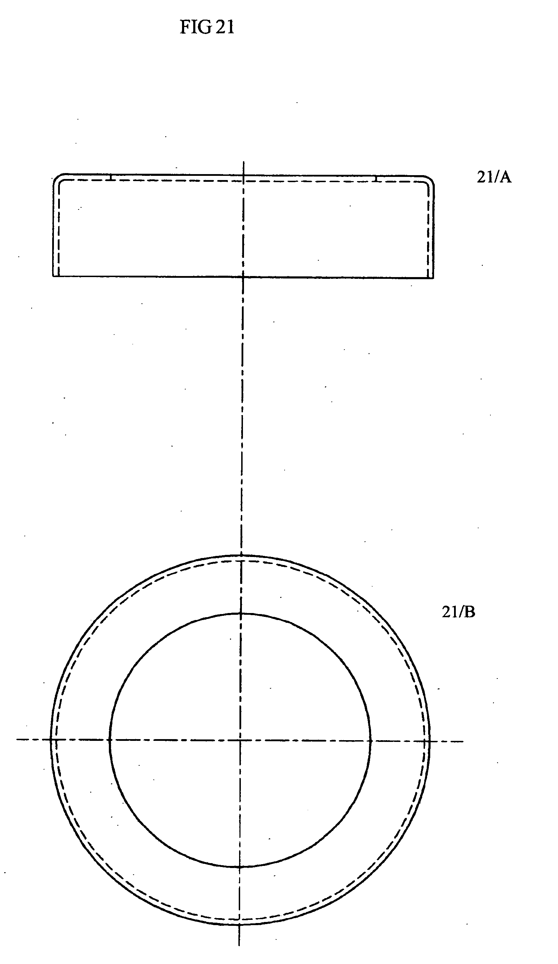

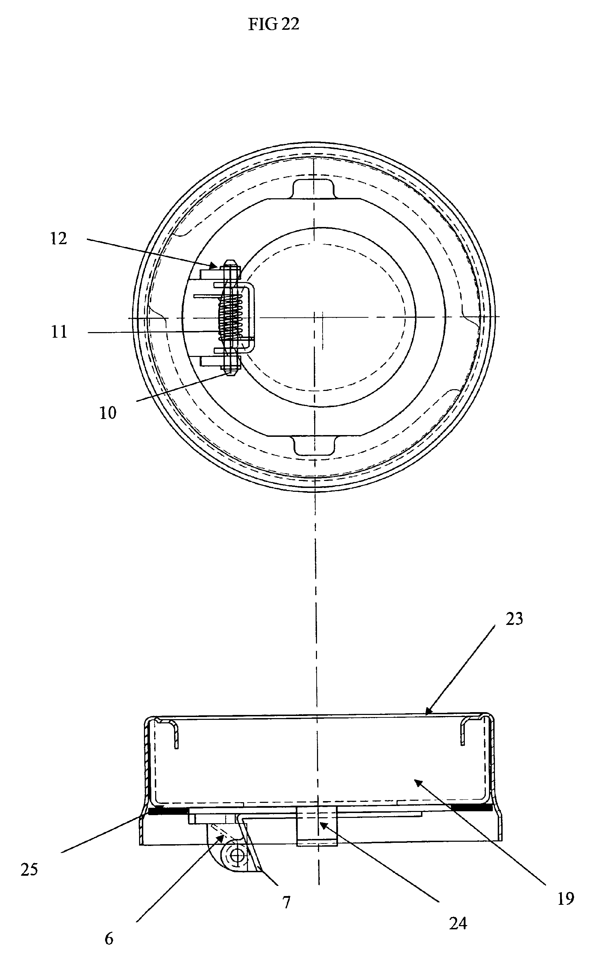

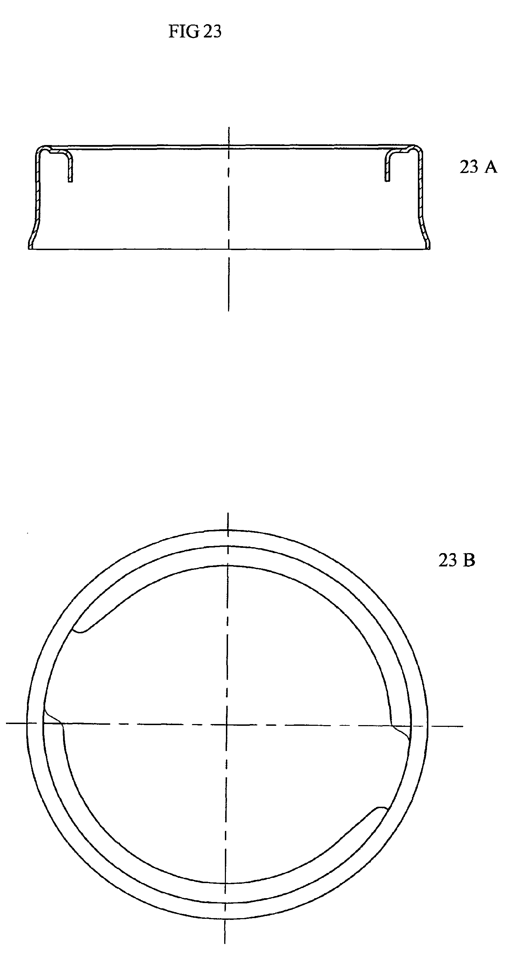

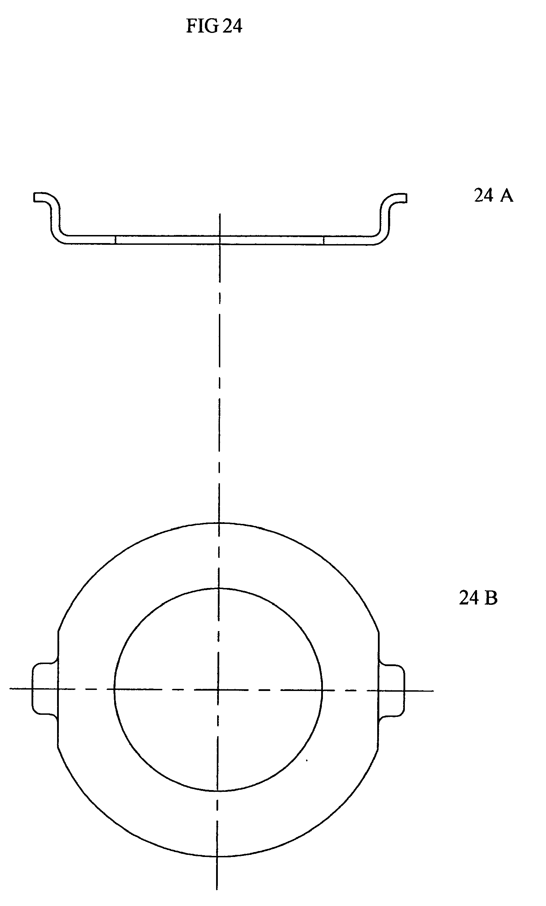

Une variante du dispositif, version fig. 22 permet de ce positionner sur un réservoir comme un bouchon d'origine. En positionnent sur le corps fig19 une pièce (24) préalablement plier et percer dans sont centre, entre le support du clapet (6) et le corps (19), sa fixation se fait par soudure électrique .Une goulotte (fig. 23) évaser vient s emboîter et coiffer le corps (19) se fixant par collage étanche et sertie sur ses coté. Un joint (25) nitrile et coller sur le corps (19) qui permet une bonne étanchéité lors du positionnement du dispositif. Lors de la mise en place du dispositif un cordon de colle forte de fixation serra positionner sur l'extrémité extérieure du joint (25), et positionner sur la goulotte du réservoir à équiper sont serrage se fait en tournant d'un quart de tour dans le sens des aguilles du montre. Une fois le dispositif installer le réservoir devient étanche et permet le non refoulement du carburant et de détremper le bouchon de fermeture du réservoir.

Le dispositif selon l'invention ne gène pas le positionnement du pistolet ni le remplissage du réservoir carburant et permet de récupérer le bouchon d'origine du véhicule.

Le dispositif selon l'invention est particulièrement destiné a tous les réservoirs de carburant poids lourds.

## Revendications

1. Dispositif anti-refoulement comprenant un corps (4) plié sur lequel est positionné un clapet(7)(20) a l'extérieur ou a l' intérieur du corps (5) qui est maintenu par une vis (13) sur lequel est positionné une rondelle (14) suivie d'une plaque (8),positionné a l'intérieur du corps (4)dans un trou (15)et vissé sur le support du clapet (6)à l'extérieur du corps (1) à l'autre extrémité une vis (13) comprenant une rondelle (14)une plaque (8), positionné a l'intérieur du corps (4)dans le trou (15)et vissé dans une plaque (9)a l'extérieur du corps (1), son positionnement dans la goulotte du réservoir a équiper se fait corps plié(3) .le dispositif modèle a clapet a l'intérieur(18) est identique au montage du modèle a clapet a l' extérieur (3). Le dispositif (fig. 22) comprend un corps (19) coiffer par une goulotte (23), sur lequel et souder la plaque (24) sur lequel vient se positionner par soudure le support du clapet (6) et le clapet (7) retenu par un axe (10) comprenant un ressort (11) pour le bon fonctionnement du clapet. Une fois le dispositif installé (1.16.19.22) le remplissage et la fermeture du réservoir se fait comme habituellement.

2. Dispositif selon la revendication 1 **caractérisé en ce que** le moyen de déplier le corps et de visser les vis (13) qui en plaquant les plaques (8)(9)(6) redresse le corps et le plaque sur les parois de la goulotte du réservoir a équiper.

3. Dispositif selon la revendication 1 **caractérisé en ce que** le clapet (7)(20) peut comprendre un trou de ventilation(22).

4. Dispositif selon la revendication 1 **caractérisé en ce que** le moyen empêchant le carburant de s'échapper et un clapet (7)(20) retenu par un ressort(11).

5. Dispositif selon l'une quelconque revendication précédent **caractérisé en ce que** le diamètre du corps (1.19) ne doit pas être inférieur au diamètre de la goulotte a équiper.

6. Dispositif selon l'une quelconque revendication précédent **caractérisé en ce que** les plaques (8) (9) doivent avoir le même rayon que le corps (fig2) pour un bon positionnement du dispositif.

7. Dispositif selon l'une quelconque revendication précédent **caractérisé en ce que** le clapet peut se positionner a l'intérieur ou a extérieur du corps (5)(21) fig. (2)(16).

8. Dispositif selon une quelconque revendication **caractérisé en ce que** le corps (5) peut avoir une hauteur et un diamètre variable.

9. Dispositif selon la revendication 1 **caractérisé en ce que** la plaque (24) serre de blocage.

10. Dispositif selon l'une quelconque revendication précédent **caractérisé en ce que** la goulotte vient coffee la goulotte du réservoir a équiper.

11. Dispositif selon l'une quelconque revendication précédent **caractérisé en ce que** le dispositif fait fonction de sas.
